# EUROPEAN PATENT APPLICATION

(11) **EP 3 862 278 A1**
(43) Date of publication of application: **11.08.2021**
(21) Application number: 21155531.3
(22) Date of filing: 05.02.2021
(51) Int. Cl.: B64G 6/00, B64G 1/46

(54) **DISCRETE SPECTRAL SENSING FOR WIRELESS, NEAR-ZERO POWER HEALTH MONITORING OF A SPACESUIT HARD UPPER TORSO**

(30) Priority: 06.02.2020 US 202016783461
(71) Applicant: Hamilton Sundstrand Corporation, Charlotte, NC 28217-4578 (US)
(72) Inventor: RAMPONE, Joseph C., Colchester, CT 06415 (US); SCHMIDT, Walter Thomas, Marlborough, CT 06447 (US); MANTESE, Joseph V., Ellington, CT 06029 (US); CHAUDHRY, Zaffir A., S. Glastonbury, CT 06073 (US)
(74) Representative: Dehns

(57) **Abstract**

Provided are embodiments of a system for performing health monitoring. The system includes one or more wake-up modules (160) configured to detect a condition, and one or more sensors (110) operably coupled to the one or more wake-up modules (160), wherein the one or more sensors (110) are configured to operate in a sleep mode and an active mode. The system also includes a spacesuit (100) comprising one or more sensors, and a controller (210) operably coupled to the one or more sensors (110), wherein the controller is configured to process measurement data from the one or more sensors (110). Also provided are embodiments of a method for performing health monitoring.

## Description

### BACKGROUND

The present disclosure relates to prognostics and health monitoring systems, and more specifically, to a method and system that uses discrete spectral sensing for wireless, near-zero power health monitoring of a spacesuit hard upper torso.

Manned space missions necessitate lightweight, durable spacesuit designs to enable surface exploration. Currently, spacesuits do not include any sensors that are used for monitoring the health or integrity of the spacesuit. The spacesuit should be periodically inspected to ensure the health and safety of the astronaut. There may be a need to perform automatic, real-time monitoring of the spacesuit.

### BRIEF DESCRIPTION

According to an embodiment, a system for performing health monitoring is provided, the system includes one or more wake-up modules configured to detect a condition; one or more sensors operably coupled to the one or more wake-up modules, wherein the one or more sensors are configured to operate in a sleep mode and an active mode; a spacesuit comprising one or more sensors; and a controller operably coupled to the one or more sensors, wherein the controller is configured to process measurement data from the one or more sensors.

In addition to one or more of the features described herein, or as an alternative, further embodiments include when operating in the sleep mode, the one or more sensors are powered OFF, and when operating in the active mode, the one or more sensors are powered ON and obtaining measurement data.

In addition to one or more of the features described herein, or as an alternative, further embodiments include switching states of the one or more sensors from the sleep mode to the active mode response to a signal from the wake-up module.

In addition to one or more of the features described herein, or as an alternative, further embodiments include a wake-up module that is a resonance-based circuit that is configured to detect the condition over a range of frequencies.

In addition to one or more of the features described herein, or as an alternative, further embodiments include a communication module that is configured to wirelessly transmit measurement data to the controller.

In addition to one or more of the features described herein, or as an alternative, further embodiments include at least one of a strain gauge, an accelerometer, a radio frequency (RF) sensor, an infrared (IR), an acoustic sensor, or a vibration sensor.

In addition to one or more of the features described herein, or as an alternative, further embodiments include a limited power source that is configured to provide power to the one or more sensors.

In addition to one or more of the features described herein, or as an alternative, further embodiments include mounting one or more sensors on a surface of the spacesuit.

In addition to one or more of the features described herein, or as an alternative, further embodiments include embedded one or more sensors in the spacesuit.

In addition to one or more of the features described herein, or as an alternative, further embodiments include a controller that is configured to communicate with an external system.

According to an embodiment, a method performing health monitoring is provided. The method includes detecting, by the wake-up module, a condition; providing a wake-up signal to a sensor responsive to the detection, the sensor is configured to operate in a sleep mode and an active mode; performing, by a sensor, a measurement responsive to receiving the wake-up signal; and transmitting the measurement to a controller.

In addition to one or more of the features described herein, or as an alternative, further embodiments include when operating in the sleep mode, the sensor is powered OFF, and when operating in the active mode, the sensor is powered ON and obtains measurement data.

In addition to one or more of the features described herein, or as an alternative, further embodiments include switching modes of the one or more sensors from the sleep mode to the active mode responsive to a receiving the wake-up signal from the wake-up module.

In addition to one or more of the features described herein, or as an alternative, further embodiments include returning the sensor to the sleep mode responsive to transmitting the measurement to the controller.

In addition to one or more of the features described herein, or as an alternative, further embodiments include measurements that are transmitted wirelessly to the controller.

In addition to one or more of the features described herein, or as an alternative, further embodiments include a wake-up module that is a resonance-based circuit that is configured to detect the condition over a range of frequencies.

In addition to one or more of the features described herein, or as an alternative, further embodiments include configuring a threshold frequency of the wake-up module.

In addition to one or more of the features described herein, or as an alternative, further embodiments include comparing the measurement to a measurement threshold to indicate a level a damage to a spacesuit; and generating an alarm based at least in part on the comparison.

In addition to one or more of the features described herein, or as an alternative, further embodiments include arranging one or more sensors are on a spacesuit.

In addition to one or more of the features described herein, or as an alternative, further embodiments include storing measurement data and alarm data.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 depicts a spacesuit equipped with sensors for performing health monitoring in accordance with one or more embodiments;
FIG. 2 depicts a system for performing health monitoring in accordance with one or more embodiments;
FIG. 3 depicts an illustration of the performance of the system in accordance with one or more embodiments; and
FIG. 4 depicts a flowchart of a method for health monitoring of a spacesuit in accordance with one or more embodiments.

### DETAILED DESCRIPTION

Overtime, spacesuits may become damaged from normal wear and tear or some incidental contact that occurs during transport or a mission. Further, extra vehicular activity exposes the spacesuit to small micrometeoroids, some traveling at up to 27,000 kilometers per hour, causing considerable damage. It is critical to ensure the integrity of the spacesuit is preserved prior to performing a mission.

Spacesuit inspections are periodically performed to ensure the safety of the user. Current techniques require a technician to visually inspect the spacesuit as well as perform some tests to ensure the spacesuit is not damaged and in condition for use. However, visual inspections from different technicians can lead to a variety of results due to the subjectivity in the interpretation of the results.

Also, there are no current techniques that are implemented to monitor the health of the suit during a mission. Astronauts are unable to perform inspections should some impact or damage occur during the mission.

In space, the astronauts have limited power supply, therefore, power consumption must be efficiently managed. Conventional sensors continuously monitor and consume large amounts of power. High-power costs are incurred when the sensors are continuously monitoring for an infrequently occurring event. This solution is inadequate for systems having a limited amount of power.

In addition, astronauts are unable to inspect their spacesuits during a mission when they are exposed to the space environment. The techniques described herein can be used to tune the sensors to monitor known frequency modes, such as falls, impacts, or some other event that occurs in an unpredictable, infrequent manner. Upon detection of such an event, the sensors can be triggered to wake up and perform a measurement. This provides the desired power savings.

The techniques described herein provide an energy-efficient system for monitoring and indicating the status of the spacesuit without consuming a substantial amount of energy. In addition, the testing results will be more consistent because the network of sensors will be able to repeatedly reproduce the results.

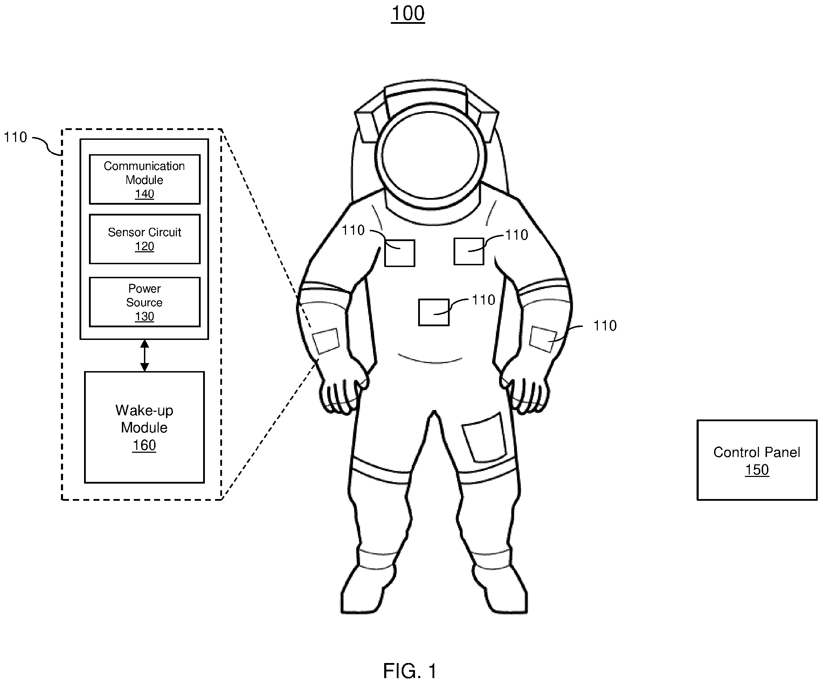

FIG. 1 depicts a spacesuit 100 in accordance with one or more embodiments. The sensors 110 are configured to perform various measurements to indicate the health of the spacesuit 100. In one or more embodiments, the sensors 110 can include any type of low-power draw sensors such as but not limited to strain gauges, accelerometers, infrared (IR) sensors, radio frequency (RF) sensors, acoustic sensors, etc. The sensors 110 are configured to operate in an active mode and a sleep mode. During the active mode, the sensors 110 are powered ON and obtain measurement data or sensors data. The measurement data can indicate a failure in the spacesuit 100 due to an impact of a particular strength or wear-and-tear over a period of time. After the data is transmitted to the control panel 150, the sensor 110 immediately returns to the sleep mode. During the sleep mode, the sensors 110 are powered OFF and are not performing any measurements. In some embodiments, when the sensors 110 are powered OFF, a small power draw remains which enables the wakeup function even when no measurements are performed. However, the power draw is much lower than typical operations of conventional sensing systems. The low power draw allows for an increase in the operable lifetime of the sensors 110. The resonance excitation that occurs allows for detection, even at the low power draw, and initiates the wakeup operation. In one or more embodiments, the sensors 110 remain in a sleep mode until a wake-up signal is received from a wake-up module 160, discussed further below.

The sensor 110 can include a sensor circuit 120 to perform the detection of a condition, a power source 130, and a communication module 140. The power source 130 can be a battery that has a limited capacity and is used by the sensor 110. The communication module 140 can be configured to transmit the measurement data or sensor data to a control panel 150 which can process the data. The control panel 150 can be configured to generate various alarms or alerts based on comparing the measurement data to a threshold measurement value or historical measurement values. The alarms and alerts can indicate normal operation, low-level risk, medium-level risk, and high-level risk. In one or more embodiments, an alert can be provided audibly or in a visibly in the "heads-up" display of the spacesuit 100.

In one or more embodiments, the control panel 150 can be located on the spacesuit 100 and can provide information on the health monitoring of the spacesuit 100. In another embodiment, the control panel 150 can be located remote or external from the spacesuit.

The sensors 110 also include a wake-up module 160. In one or more embodiments, the wake-up module 160 is a resonance-based circuit. The wake-up module 160 is coupled to the sensor 110 to provide a wake-up signal to switch the sensor 110 from a sleep mode to an active mode to perform a measurement. Because the wake-up module 160 is a resonance-based circuit, upon detection of a condition such as an impact the generates a signal that is at the configured resonance frequency, the wake-up module 160 will provide the wake-up signal to the switch the mode of the sensor 110.

In one or more embodiments, the wake-up module 160 and the sensor 110 can be integrated into the same package. In another embodiment, the wake-up module 160 and sensor 110 can be individually packaged. Although a spacesuit 100 is shown in FIG. 1 it should be understood the wake-up module and sensors can be used to monitor other types of equipment and is not limited by this example.

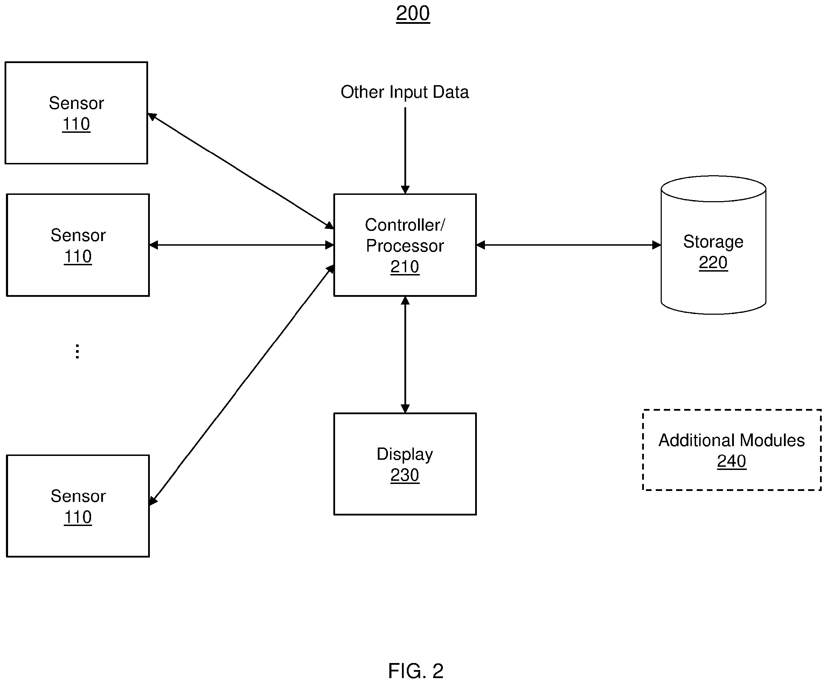

FIG. 2 depicts a system 200 that uses discrete spectral sensing for wireless, near-zero power health monitoring in accordance with one or more embodiments. The sensors 110 form a sensor network that can be deployed on a spacesuit or other equipment to be monitored. Although only three sensors 110 are shown it should be understood that any number and arrangement of sensors 110 can be used.

The network of sensors 110 can be operated independently or in a distributed manner. The sensors 110 can be configured to operate in a centralized manner where one of the plurality of sensors 110 has the role of a central coordinator and aggregates the sensor data from the other sensors 110.

In one or more embodiments, the sensors 110 can be embedded into the spacesuit 100 to provide an additional layer of protection for the sensors by preventing the sensors 110 from getting scratched or damaged.

The controller/processor 210 is configured to communicate with the sensors 110. The controller/processor 210 can also be configured to receive input data such as control or command signals from other systems. The controller/processor 210 can be housed in a control panel such as that shown in FIG. 1 or in an external or remote system. Controller/processor 210 can be configured to communicate with other modules 240 such as but not limited to remote or external computing devices and systems.

The display 230 can receive signals from the controller/processor 210 and numerically or graphically represent the measurements of the sensor network. The display 240 can include information such as but not limited to the value of the sensor reading, the sensor location, the remaining life of the sensor, time of operation, alarm levels, etc. The storage 220 can be used to store the historical sensor information obtained from the sensors 110 of the sensor network. In one or more embodiments, the display 230 may be incorporated in a heads-up display in the spacesuit or on an external system that is in communication with the spacesuit.

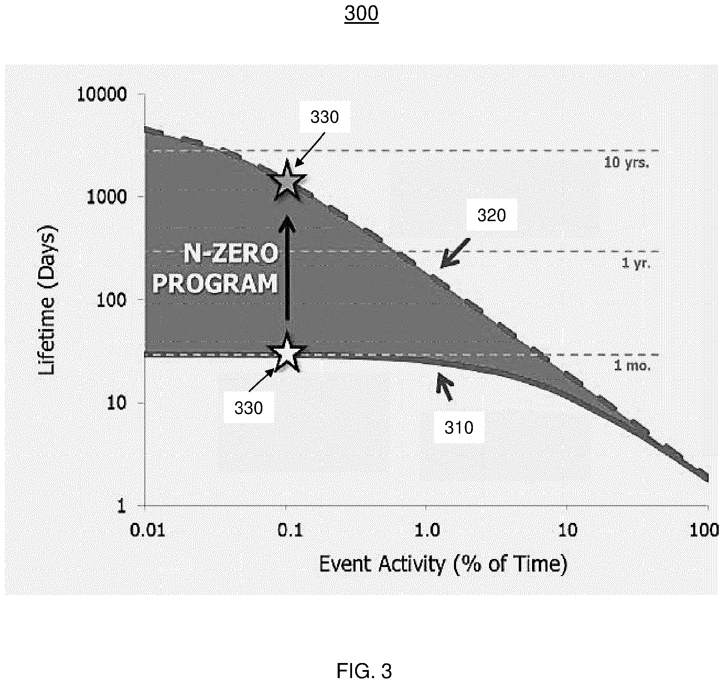

FIG. 3 depicts a graph 300 illustrating the performance of the sensors using the wake-up module in accordance with one or more embodiments. The x-axis of the graph 300 represents the Event Activity (% of Time). The y-axis represents the Lifetime of the battery of the sensor which is measured in days. Each unit of the graph increases by a factor of 10. The x-axis begins at 0.01, while the y-axis begins at 1. This scale is used for illustration purposes and the performance of the sensor (in terms of lifetime) can be represented using other scales or parameters. The first curve 310 illustrates the battery drainage that occurs using conventional monitoring circuity. The second curve 320 illustrates the battery leakage, active processing, and wake-up module in accordance with one or more embodiments.

As shown in FIG. 3, at point 330, the lifetime for the conventional monitoring circuitry lasts approximately 1 month before replacement is required when the activity level is 0.1%. However, at point 340 the lifetime of the sensors is increased to approximately 7-8 years at the same activity level of 0.1%. The improvement in battery life provides a low maintenance cost solution for monitoring the state of the sensors.

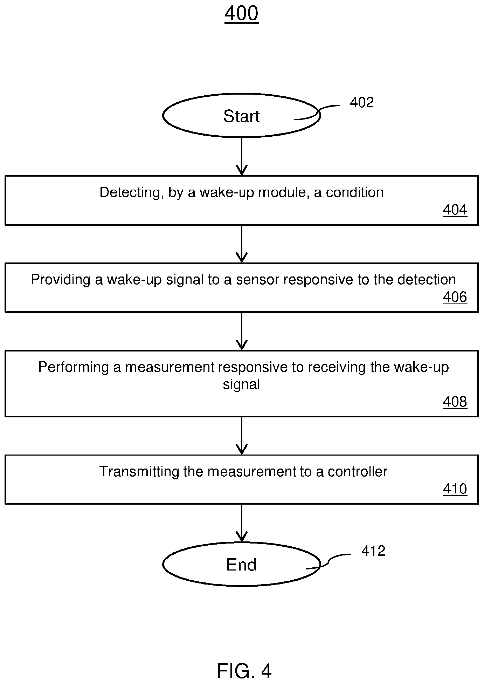

FIG. 4 depicts a flowchart of a method 400 that uses discrete spectral sensing for wireless, near-zero power health monitoring in accordance with one or more embodiments. The method 400 begins at block 402 and proceeds to block 404 which provides detecting, by the wake-up module, a condition. In one or more embodiments, the condition can include an impact that triggers the resonance-based circuit of the wake-up module. Block 406 provides a wake-up signal to a sensor responsive to the detection. The wake-up signal switches the sensor from a sleep mode to an active mode. At block 408 a measurement is performed, by a sensor, responsive to receiving the wake-up signal. The sensor, currently in a sleep mode, receives the wake-up signal from the wake-up module and enters the active mode. When in the active mode, the sensor obtains measurement data.

Block 410 transmits the measurement to a controller. In one or more embodiments, the measurement is transmitted wirelessly to a controller for further processing. The processing can include comparing the measurement data to a measurement threshold to determine if an alarm is should be triggered. The alarm can indicate different urgency levels. Responsive to transmitting the measurement to the controller, the sensor enters the sleep mode to conserve the limited power resources. The method 400 ends at block 412. It should be understood that the steps shown in FIG. 4 are not intended to limit the scope and additional/different steps can be included in the method 400.

The technical effects and benefits include implementing health monitoring for a spacesuit during a mission. In addition, a power-efficient, low-maintenance technique for obtaining sensor data from the spacesuit.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for performing health monitoring, the system comprising:
one or more wake-up modules (160) configured to detect a condition;
one or more sensors (110) operably coupled to the one or more wake-up modules, wherein the one or more sensors are configured to operate in a sleep mode and an active mode;
a spacesuit (100) comprising one or more sensors; and
a controller operably coupled to the one or more sensors, wherein the controller is configured to process measurement data from the one or more sensors.

2. The system of claim 1, wherein when in operating in the sleep mode, the one or more sensors are powered OFF, and wherein when operating in the active mode, the one or more sensors are powered ON and obtaining measurement data.

3. The system of claim 1 or 2, wherein the one or more sensors (110) switch states from the sleep mode to the active mode response to a signal from the wake-up module.

4. The system of any preceding claim, wherein the wake-up module (160) is a resonance-based circuit that is configured to detect the condition over a range of frequencies.

5. The system of any preceding claim, wherein the one or more sensors (110) comprises a communication module configured to wirelessly transmit measurement data to the controller.

6. The system of any preceding claim, wherein one or more sensors (110) are at least one of a strain gauge, an accelerometer, a radio frequency (RF) sensor, an infrared (IR), an acoustic sensor, or a vibration sensor.

7. The system of any preceding claim, further comprising a limited power source (130) that is configured to provide power to the one or more sensors.

8. The system of any preceding claim, wherein the one or more sensors (110) are mounted a surface of the spacesuit; and/or
wherein the one or more sensors are embedded in the spacesuit.

9. The system of any preceding claim, wherein the controller is configured to communicate with an external system.

10. A method performing health monitoring, the method comprising:
detecting, by the wake-up module, a condition;
providing a wake-up signal to a sensor responsive to the detection, the sensor is configured to operate in a sleep mode and an active mode;
performing, by a sensor, a measurement responsive to receiving the wake-up signal; and
transmitting the measurement to a controller.

11. The method of claim 10, wherein when operating in the sleep mode, the sensor is powered OFF, and when operating in the active mode, the sensor is powered ON and obtains measurement data.

12. The method of claim 10 or 11, wherein the one or more sensors switch modes from the sleep mode to the active mode responsive to a receiving the wake-up signal from the wake-up module.

13. The method of any of claims 10-12, further comprising returning the sensor to the sleep mode responsive to transmitting the measurement to the controller; and/or
wherein the measurement is transmitted wirelessly to the controller; and/or
wherein the wake-up module is a resonance-based circuit that is configured to detect the condition over a range of frequencies; and/or
further comprising configuring a threshold frequency of the wake-up module.

14. The method of any of claims 10-13, further comprising comparing the measurement to a measurement threshold to indicate a level a damage to a spacesuit; and
generating an alarm based at least in part on the comparison.

15. The method of any of claims 10-14, further comprising arranging one or more sensors are on a spacesuit; and/or further comprising storing measurement data and alarm data.
